# EUROPEAN PATENT APPLICATION

(11) **EP 2 416 481 A2**
(43) Date of publication of application: **08.02.2012**
(21) Application number: 11170201.5
(22) Date of filing: 16.06.2011
(51) Int. Cl.: H02M 3/156

(54) **Power source unit and lighting fixture**

(30) Priority: 28.06.2010 JP 2010146564
(71) Applicant: Toshiba Lighting & Technology Corporation, Yokosuka-shi Kanagawa 237-8510 (JP)
(72) Inventor: Terasaka, Hiroshi, Yokosuka-shi, Kanagawa 237-8510 (JP); Osaki, Hajime, Yokosuka-shi, Kanagawa 237-8510 (JP); Kamata, Masahiko, Yokosuka-shi, Kanagawa 237-8510 (JP); Iwai, Naoko, Yokosuka-shi, Kanagawa 237-8510 (JP)
(74) Representative: Kramer - Barske - Schmidtchen

(57) **Abstract**

According to one embodiment, there is provided a lighting fixture including a fixture body, straight-tube type LED lamps each having semiconductor light emitting elements, and a dedicated power source for lighting the semiconductor light emitting elements. The dedicatedpower source outputs current having a trapezoidal waveform a period of a peak portion of which is 54% or more of one cycle, and thus lights the semiconductor light emitting elements.

## Description

### FIELD

Embodiments described herein relate to a power source unit which outputs current to operate loads, and a lighting fixture including the power source unit.

### BACKGROUND

For example, a lighting fixture is conventionally used which includes a light emitting module in which a plurality of light emitting diodes (LEDs) as loads are connected in series to each other. In such a lighting fixture, constant direct current is supplied to the light emitting module from a power source circuit and the LEDs are approximately evenly lit.

However, when arc is generated in the circuit at the time of detachment, contact failure, disconnection or the like at each connection part in the circuit, arc is not easily eliminated due to supply of constant direct current.

Thereupon, there is a structure so that output of the power source unit is reduced for a fixed period for eliminating arc so that arc is prevented from continuing.

### BRIEF DESCRIPTION OF THE DRAWINGS

Fig. 1 is a circuit diagram of a power source unit showing a first embodiment,
Fig. 2 is a perspective view of a lighting fixture including the same power source unit as above,
Figs. 3 (a) to (c) are explanatory diagrams illustrating waveforms of output current corresponding to control of a load of the same power source as above,
Fig. 4 is an explanatory diagram illustrating a calculation process of a ripple factor of an output current waveform of the same power source unit as above,
Fig. 5 is a graph showing a relationship between light output of the same lighting fixture as above and output current control of the power source unit,
Fig. 6 is a table showing correspondence of a rate of a period of a maximum output current value of the same power source unit as above to one cycle and a rate of subjects sensing flickering of semiconductor light emitting elements, and
Figs. 7 (a) to (c) are explanatory diagrams illustrating waveforms of output current corresponding to control of loads of a power source unit of a second embodiment.

### DETAILED DESCRIPTION

A power source unit of an embodiment includes a power source circuit which outputs current having a trapezoidal waveform a period of a maximum value of which is 54% or more of one cycle, and thus operates loads.

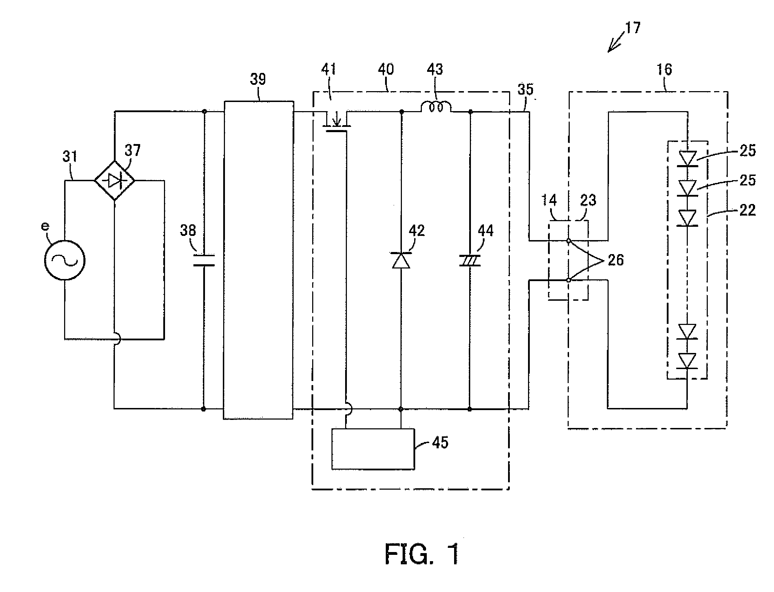

A first embodiment of the present invention will be described below with reference to Figs. 1 to 6.

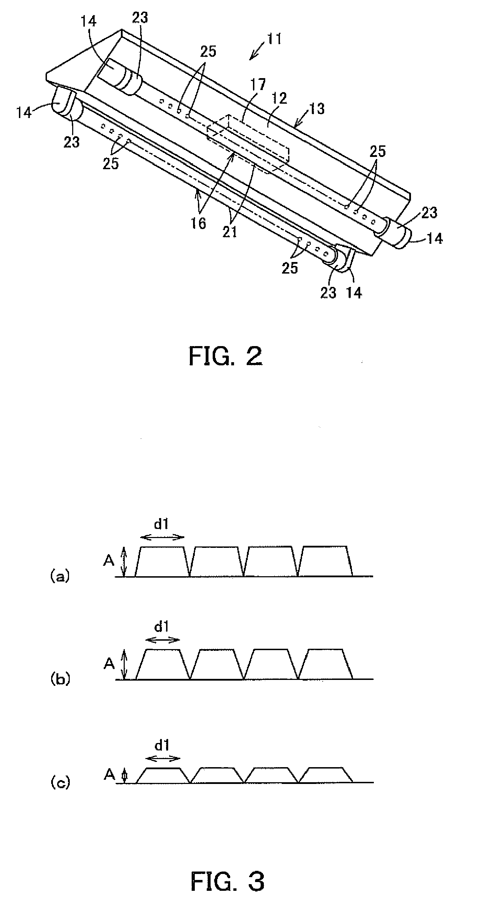

In Fig. 2, the reference numeral 11 denotes a lighting fixture, and the lighting fixture 11 is a ceiling direct mounting type lighting fixture and includes: a fixture body 13 having a body portion (not shown) provided on a ceiling and a reflector 12 attached to the bodyportion and having an inversed triangular shape; a pair of sockets 14 as light source attaching units disposed opposite each other at both ends of the fixture body 13; straight-tube type LED lamps 16 each which is an LED lamp as a straight-tube type light source or a lamp connectedbetween the pair of sockets 14; and a dedicated power source 17 as a power source unit (power source circuit) which supplies power to and lights the straight-tube type LED lamps 16. The lighting fixture 11 is a two-light type lighting fixture using two sets of the pair of sockets 14 and two straight-tube type LED lamps 16.

The lighting fixture 11 of the embodiment is a renewal system that uses the fixture body 13 and the sockets 14 of the existing lighting fixture structure using a straight-tube type fluorescent lamp as it is and using a straight-tube type LED lamp 16 and dedicated power source 17. Alternatively, in the case where the lighting fixture 11 using the straight-tube type LED lamp 16 and the dedicated power source 17 is newly installed, it is installed as the lighting fixture 11 reusing the fixture body 13 and the sockets 14 of the existing lighting fixture structure using a straight-tube type fluorescent lamp, and using the straight-tube type LED lamp 16 and dedicated power source 17.

The straight-tube type LED lamp 16 includes, for example, a cylindrical straight-tube type body 21 having transmittance, a light emitting module 22 housed in the tube type body 21, and a connection part 23 provided at both ends of the tube body 21.

The tube body 21 is made of glass or resin having transmittance and diffuseness, and formed in a long cylindrical shape having substantially the same tube length, tube diameter and appearance as those of a straight-tube type fluorescent lamp. The connection portions 23 as an attachment portion are provided at both ends of the tube body 21.

The light emittingmodule 22 includes : a slender substrate (not shown) arranged along a tube axial direction of the tube body 21 and a plurality of semiconductor elements 25 as a load such as an LED element mounted along a longitudinal direction of the substrate. Light may be emitted mainly from a predetermined direction of the tube body 21 by making the substrate of the light emitting module 22 flat and mounting the semiconductor light emitting element 25 on one face of the flat substrate. Alternatively, light may be emitted from the whole circumference of the tube body 21 by forming the substrate in a polygonal cylindrical shape and mounting the semiconductor light emitting element 25 on the periphery of the polygonal cylindrical-shaped substrate. In the case of an LED element, for example, in the semiconductor light emitting element 25, an LED chip emitting blue light is sealed with transparent resin containing fluorescent matter which is excited by blue light to emit yellow light, and white light is emitted from a surface of the transparent resin.

The connection portion 23 is connected to the socket 14, for example, formed of an insulative synthetic resin in the same shape as that of a cap of a straight-tube type fluorescent lamp, and attached and fixed to the end of the tube body 21. A pair of lamp pins 26 as power receiving portions similar to lamp pins of the straight-tube type lamp is projected on an end face of the connection portion 23. Moreover, the connection portion 23 is not limited to being constituted by the pair of lamp pins 26, and may be constituted by a single lamp pin or the like. Any constitution is applicable to the connection portion 23 as long as it can realize electric connection or support of the connection portion 23 to the socket 14. Additionally, the connection portion 23 may be electrically and physically connected to the socket 14 via, for example, an adaptor.

The straight-tube type LED lamp 16 has substantially the same outer diameter and total luminous flux as those of, for example, an existing 40W type (FL 40 type, FHF 32 type) straight-tube type fluorescent lamp, a total length in a tube axial direction of shorter than 1300mm and 1000mm or longer, and rated characteristics including the total luminous flux of 20001m or more.

As shown in Fig. 1, a pair of power supply wires 31 for supplying a commercial AC power source e (for example, 100V AC, 50/60Hz) is connected to an input side of the dedicated power source 17 through the inside of the fixture body 13, and each socket 14 is connected to an output side of the dedicated power source 17 via a connecting wire 35. Moreover, although only one of the straight-tube type LED lamps 16 is shown in Fig. 1, the other straight-tube type LED lamp 16 has the same constitution.

The dedicated power source 17 here includes, for example: a full-wave rectifying element 37 such as a bridge diode for rectifying AC power from the commercial AC power source e: a (first) smoothing element 38 such as a smoothing capacitor for smoothing output power from the full-wave rectifying element 37; a step-up circuit 39 as a step-up unit; a step-down circuit 40 as a step-down unit; and the like, converts AC power such as an AC sine wave or AC rectangular wave to DC, and supplies the DC to the lamp pins 26 of the straight-tube type LED lamp 16 through the socket 14. Moreover, for example, the dedicated power source 17 may be connected to an output side of an AC power source such as a fluorescent lamp lighting device for outputting AC power from the commercial AC power source e, or a line filter or the like may be connected between the AC power source e and the full-wave rectifying element 37.

The step-up circuit 39 is a well-known circuit, for example, a step-up chopper circuit, and electrically connected to an output side of the smoothing element 38. Moreover, the step-up circuit 39 can be optionally constituted, and description of the detailed constitution will be omitted.

The step-down circuit 40 is, for example, a step-down chopper circuit, has: a series circuit of a switching element 41 such as a MOSFET and a diode 42 serving as a flywheel diode, the series circuit electrically connected to an output side of the step-up circuit 39; and a series circuit of an inductor 43 and a (second) smoothing element 44 such as a capacitor, the series circuit electrically connected in parallel to the diode 42, and performs step-down operation in a manner that the switching element 41 is switching-controlled by a control unit 45.

The dedicated power source 17 outputs output current having, for example, a trapezoidal waveform shown in Figs. 3(a) to (c), and the output current (current waveform) can be controlled by switching control (a switching frequency and a duty ratio) of the switching element 41. In the dedicated power source 17, a period d1 of a maximum value or a peak portion of the trapezoidal waveform is set to 54% or more of one cycle. Moreover, the waveform of output current shown in Fig. 3 is only an ideal (obtained by calculation) waveform, and a real waveform of output current contains some form errors.

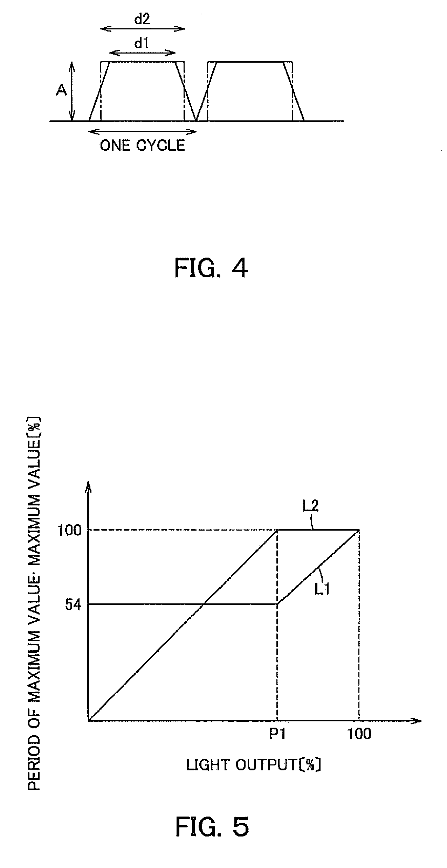

The period d1 of the above peak portion is here defined by a ripple factor RF of output current. The ripple factor RF is obtained by dividing a variation width A of current by an average (effective current value) Ia (RF=A/Ia), and indicates that as the ripple factor RF is smaller, a pulsating current contained in output current is smaller. When output current has, for example, a rectangular waveform shown by the image line shown in Fig. 4, the variation width A of current becomes a maximum value of the rectangular wave, therefore, if the width of rectangular wave for one cycle (on-duty) is d2, the ripple factor RF is A/ (A· d2)=1/d2. The ripple factor RF of the dedicated power source 17 is set to 1.3 or smaller, then 1/d2≤1 .3 is established, thereby d2≥0.769 can be obtained. In the case where the output current is a trapezoidal waveform as shown in the present embodiment, when the trapezoidal waveform of the embodiment is made to approximate to the rectangular waveform shown by the image line in Fig. 4, since d1=d2-(1-d2)=2·d2-1 is established, d1≥0.538 · · · is obtained by substituting the above d2≥0.769 · · · . Accordingly, in the dedicated power source 17 of the embodiment, the period d1 of a peak portion of the trapezoidal waveform of output current, that is, on-duty is set to 54% or more of one cycle so that the ripple factor RF of output current becomes 1.3 or smaller.

Output current to be output to the semiconductor light emitting elements 25 is controlled by controlling the switching element 41 by the control unit 45 in the dedicated power source 17, and thus control or dimming of the semiconductor light emitting elements 25 can be performed. Since the period d1 of a peak portion of output current is set to 54% or more of one cycle as described above, the dedicated power source 17 is constituted so that it decreases the maximum value when reducing output current to obtain deep dimming. That is, as shown in the graph of Fig. 5, the dedicated power source 17 is constituted so that, between a maximum output current value (Fig. 3(a)) corresponding to a full-lighting state, a light output 100% (dimming factor 0%), and a predetermined output current value (Fig. 3(b)) corresponding to a predetermined light output P1 (less than 100%), controls light output by fixing the maximum value to a predetermined value and controlling light output by increasing or decreasing the period d1 of a peak portion (indicated by a broken line graph L1), when controlling output current to a current value corresponding to light output smaller than the predetermined light output P1 or a current value not larger than the predetermined output current value, that is, when further increasing the dimming factor, the period d1 of a peak portion is fixed to 54% of one cycle to increase or decrease the maximum value (variation width A) (Fig. 3(c)) (indicated by a broken line L2 in the graph) . That is, the predetermined light output P1 is the output of the semiconductor light emitting elements 25 when the period d1 of a peak portion of output current having a trapezoidal waveform of the dedicated power source 17 is 54% of one cycle and the maximum value is the predetermined value.

Moreover, increase/decrease of the period d1 of a peak portion of output current and the maximum current value is not always required to be linearly controlled. In the present embodiment, since in the dedicated power source 17, the commercial AC power source e of 50/60 Hz is subj ected to full-wave rectification by the full-wave rectifying element 37, the frequency of pulsating current contained in output current is 100/120Hz. As long as pulsating current contained in output current has a frequency of, for example, 100Hz or higher, any output current can be used as long as it responds similarly.

In the dedicated power source 17, with respect to a boosting voltage boosted by a boosting circuit 39, the switching element 41 is turned on by the control means 45 in the step-down circuit 40, thereby an increased current flows to the inductor 43 and magnetic energy is accumulated, and the switching element 41 is turned off, thereby the magnetic energy accumulated in the inductor 43 is discharged via the diode 42, a decreased current flows to charge the smoothing element 44. Hereinafter, by repeating the same circuit operation, in the present embodiment, constant current having a trapezoidal wave current waveform shown in Fig. 4 is output from the dedicated power source 17 and supplied to the semiconductor light emitting elements 25 of the light emitting module 22 via the connecting wire 35, the socket 14 and the lamp pins 26 of the connection portion 23, and the semiconductor light emitting elements 25 are lit.

Since output current of the dedicated power source 17 here has a trapezoidal waveform, even when arc is generated in the circuit due to detachment, contact failure, disconnection or the like at each connection part, output voltage (output current) to be supplied to the straight-tube type LED lamp 16 becomes 0 for each cycle and the arc can be prevented from continuing. Since the period d1 of a peak portion of output current having a trapezoidal waveform, of the dedicated power source 17 is set to 54% or more of one cycle, the ripple factor RF of the output current of the dedicated power source 17 is 1.3 or smaller. Thus, with operation unevenness or flickering, change in the emitted light amount visible to a user of the semiconductor light emitting elements 25 can be suppressed, and in particular, flickering under an environment of high illuminance can be reduced.

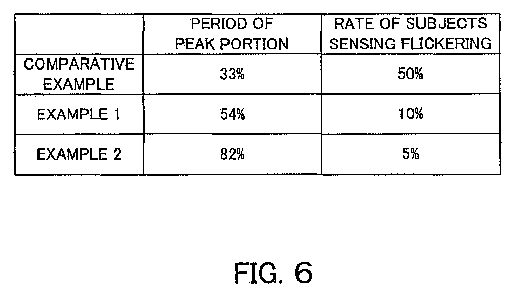

Fig. 6 shows an experimental result on whether a plurality of subjects watching lamps having different periods of peak portions of output current having a trapezoidal waveform sense flickering. The periods d1 of peak portions of output current having a trapezoidal waveform were set to 54% and 82% in Example 1 and Example 2 corresponding to the first embodiment, and the period d1 was set to 33% in the comparative example corresponding to a prior art. In other words, the ripple factors RF of output current in Example 1, Example 2 and the comparative example were 1.3, 1.1 and 1.5, respectively. As shown in Fig. 6, although 50% or more of the subjects sense flickering in the comparative example, 10% and 5% of the subjects sense flickering in Example 1 and Example 2, respectively.

That is, the present embodiment reveals that, by setting the period d1 of a peak portion of output current having a trapezoidal waveform to 54% or more of one cycle, the ripple factor RF of the output current can be lowered to effectively suppress flickering of the semiconductor light emitting elements 25.

In particular, when the frequency of pulsating current contained in output current is in a relatively small range, for example, approximately 100Hz, a user can detect flickering of the semiconductor light emitting elements 25 by eye and easily sense the flickering. Thus, by setting the period d1 of apeak portion of output current having a trapezoidal waveform to 54% or more of one cycle in the dedicated power source 17 for outputting output current containing pulsating current of 100 Hz or higher, even for the semiconductor light emitting element 25 which lights by the output current containing a pulsating current having a frequency band in which a user easily senses flickering, the user hardly senses flickering, and discomfort as a result of the flickering can be reduced.

Since the dedicated power source 17 is arranged on the fixture body 13 side in the lighting fixture 11 compatible with the straight-tube type LED lamp 16, the straight-tube type LED lamp 16 can be provided at a low price and easily replaced in the same manner as the existing straight-tube type fluorescent lamp. Additionally, cost in replacement of the straight-tube type LED lamp 16 can be reduced, thermal influence of the semiconductor light-emitting elements 25 on the dedicated power source 17 can be reduced, and reliability and life of the dedicated power source 17 can be improved.

By increasing or decreasing the period of a peak portion of current having a trapezoidal waveform in a range of 54% or more of one cycle, output current to the semiconductor light emitting elements 25 is controlled between the maximum output current value and the predetermined output current value smaller than the maximum output current value. When the output current is controlled to be not larger than the predetermined output current value, the period of the maximum value is fixed to 54% of one cycle to increase or decrease the maximum value, thereby while arc is prevented from continuing, the ripple factor of the output current is lowered, and operation unevenness (flickering) of the semiconductor light emitting elements 25 is suppressed, more effective control of the semiconductor light emitting elements 25 or widening of a dimming width of the semiconductor light emitting elements 25 can be performed to enable deep dimming of the semiconductor light emitting elements 25.

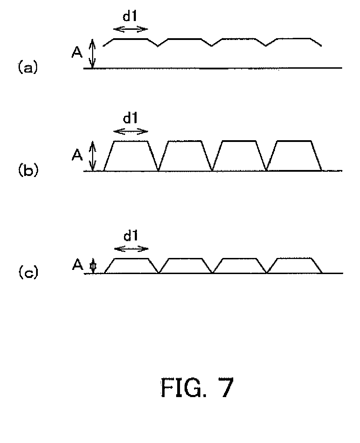

Next, a second embodiment will be described with reference to Fig. 7. Moreover, the same symbols are attached to the same components and operations as those of the first embodiment, and description thereof will be omitted.

Although the second embodiment has the same constitutions as those of the first embodiment, the embodiments differ in terms of control of output current of the dedicated power source 17.

Specifically, the dedicated power source 17 is constituted so that a minimum value is increased when the period d1 of a peak portion of output current is fixed to a predetermined period of 54% or more of one cycle (an on-duty of the switching element 41 is fixed to a predetermined on-duty) to increase output current. That is, the dedicated power source 17 is constituted so that it controls light output by increasing or decreasing the minimum value or a trough portion between cycles of output current having a trapezoidal waveform, between the maximum output current value (Fig. 7(a)) corresponding to the maximum light output or a light output of 100% (dimming factor of 0%) and a predetermined output current value (Fig. 7 (b)) corresponding to a predetermined light output P2 (less than 100%), and when controlling output current to a current value corresponding to light output smaller than the predetermined light output P2 or a current value smaller than the predetermined output current value, in other words, when further increasing the dimming factor, the maximum value (variation width A) (Fig. 7 (c)) is increased or decreased while fixing the period d1 of a peak portion of output current to the predetermined period of 54% or more of one cycle. Moreover, the minimum value is controlled in a range that arc generated in the circuit due to detachment, contact failure, disconnection or the like at each connection part can be eliminated. The range is preset in accordance with each distance between the connection parts in the lighting fixture 11 (dedicated power source 17).

By fixing the period d1 of a peak portion of output current having a trapezoidal waveform to the predetermined period of 54% or more of one cycle and increasing or decreasing the minimum value output current to the loads is controlled between the maximum output current value and the predetermined output current value smaller than the maximum output current value. When the output current is controlled to be not larger than the predetermined output current value, the period of the maximum value is fixed to the predetermined value and the maximum value is increased or decreased. Thus, while arc is prevented from continuing, the ripple factor of output current is lowered and operation unevenness of the load is suppressed, more effective control of the semiconductor light emitting element 25 or widening of a dimming width of the semiconductor light emitting elements 25 can be performed to enable deep dimming of the semiconductor light emitting elements 25.

Moreover, in each of the above embodiments, the dedicated power source 17 may be constituted so that it outputs, for example, output voltage (output current) of 0V (0A) for each cycle as long as the period d1 of the maximum output current value having a trapezoidal waveform is set to 54% or more. In this case, for example, even when arc is generated in a circuit due to detachment, contact failure, disconnection or the like at each connection part in the circuit in the straight-tube type LED lamp 16, output voltage (output current) to be supplied to the straight-tube type LED lamp 16 becomes 0V (0A) for each cycle, thus arc can be prevented from continuing.

As the lighting fixture 11, for example, a single lamp type lighting fixture using one pair of sockets 14 may be used, or a multiple-lamp type lighting fixture using three or more sets of the pair of sockets 14 may be used. Additionally, the lighting fixture 11 is applicable not only to the ceiling direct mounting type lighting fixture but also to an embedding type lighting fixture, etc.

In place of the straight-tube type LED lamp 16, for example, a self-ballasted LED lamp may be used. A lamp including the semiconductor light emitting elements 25, which are lit turned on by the dedicated power source 17 and emit light, may be optionally constituted.

The semiconductor light emitting element 25 may be, for example, an organic EL.

Power may be supplied to the straight-tube type LED lamp 16 via both pair of sockets 14 or only one of them. When power is supplied via only one of the sockets 14, the other socket 14 may only support an end of the straight-tube type LED lamp 16, or, for example, a dimming signal may be transmitted to the straight-tube type LED lamp 16 via the other socket 14 so that the semiconductor light emitting elements 25 may be dimmed by a dimming circuit built in the straight-tube type LED lamp 16. Alternatively, without use of the sockets 14, power may be suppliedfromanon-contactpower supplying portion arranged at the fixture body 13 side to a non-contact power receiving portion arranged at the straight-tube type LED lamp 16 in a non-contact form by a dielectric coupling method or the like. Additionally the sockets 14 may be used only for supporting the straight-tube type LED 16 and another power supplying method may be used for the straight-tube type LED lamp 16.

Desired loads other than the DC driving semiconductor light emitting element 25 can be used.

The control methods of the above embodiments may be combined with each other. That is, the same effects as those of the above embodiments can be obtained even if the dedicated power source 17 is constituted so that, when controlling output current to the loads between the maximum output current and the predetermined output current value smaller than the maximum output current, the period d1 of a peak portion of current having a trapezoidal waveform is increased or decreased in a range of 54% or more of one cycle, or fixed to the predetermined value not smaller than 54% to increase or decrease the minimum value, and when controlling the output current value to not larger than the predetermined output current value, the period of the maximum value is fixed to 54% of one cycle or the predetermined value to increase or decrease the maximum value.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A power source unit (17) comprising a power source circuit (17) which outputs current having a trapezoidal waveform a period of a maximum value of which is 54% or more of one cycle, and thus operates loads (25).

2. The power source unit (17) according to claim 1, wherein
the power source circuit (17) controls output current to the loads between a maximum output current value and a predetermined output current value smaller than the maximum output current value by increasing or decreasing a period of a maximum value of current having a trapezoidal waveform in a range of 54% or more of one cycle, and when controlling the maximum current value to not larger than the predetermined output current value, the period of the maximum value is fixed to 54% of one cycle to increase or decrease the maximum value.

3. The power source unit (17) according to claim 1 or 2, wherein
the power source circuit (17) controls output current to the loads between a maximum output current and a predetermined output current value smaller than the maximum output current by fixing a period of a maximum value of current having a trapezoidal waveform to a predetermined period of 54% or more of one cycle, and increasing or decreasing a minimum value, and when controlling the value of the output current to not larger than the predetermined output current value, the period of the maximum value is fixed to the predetermined value to increase or decrease the maximum value.

4. A lighting fixture (11) comprising:
a fixture body (13);
lamps (16) each having semiconductor light emitting elements (25) as loads, and
the power source unit (17) according to any one of claims 1 to 3 for lighting semiconductor light emitting elements (25) .
